# EUROPEAN PATENT APPLICATION

(11) **EP 2 287 408 A1**
(43) Date of publication of application: **23.02.2011**
(21) Application number: 09167863.1
(22) Date of filing: 13.08.2009
(51) Int. Cl.: E03C 1/00, G01F 1/00

(54) **H2ecO Ecostat**

(71) Applicant: Dobbins, Christopher, 8005 Zürich (CH)
(72) Inventor: Dobbins, Christopher, 8005 Zürich (CH)

(57) **Abstract**

The H2ecO Ecostat is a device designed to measure the temperature and amount of water used by a tap or shower. The device would display the information on a screen and also send the information by Bluetooth or a similar wireless function to a computer whereby the user(s) could use a program to track and monitor their daily water use. It is intended that the device can operate without the use of a battery, and can draw power from the pressure/temperature of the water.

## Description

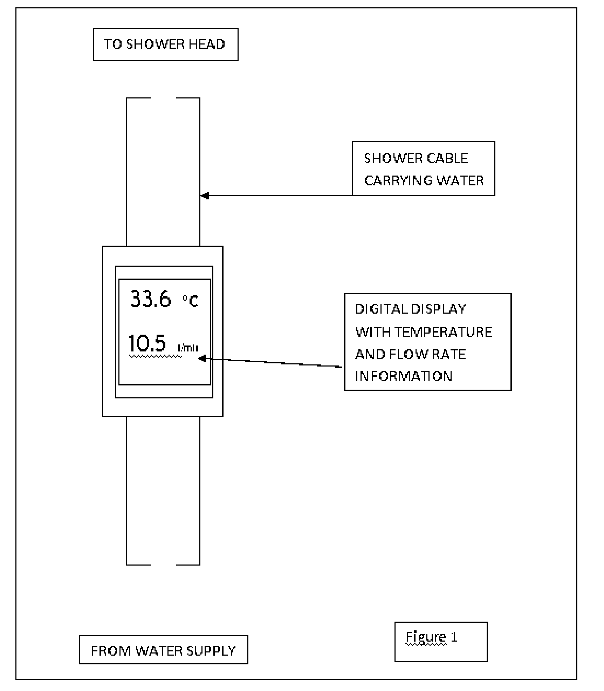

The H2ecO Ecostat is a device for measuring and displaying the temperature and amount of water passing through a tap/faucet (Figure 1, 2,3).

The H2ecO Ecostat consists of a digital flow meter, digital thermometer, Bluetooth transmitter and an LCD screen.

By mounting an H2ecO Ecostat in the middle of a shower cable (Figure 1) it would be suitable for measuring the heat and water used by the shower.

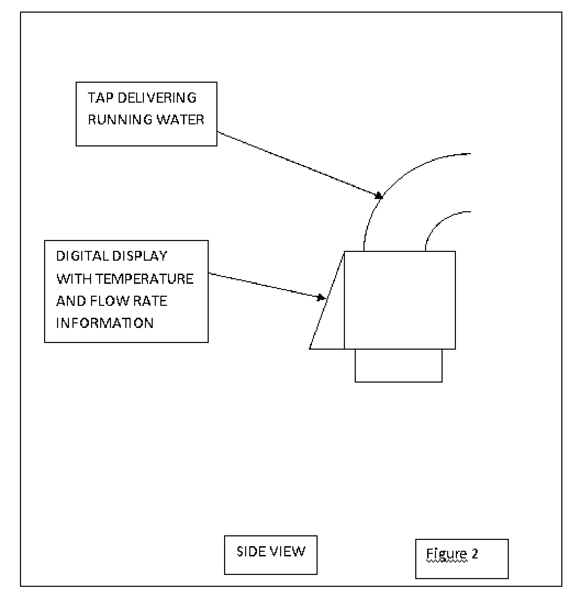

It may be the case that the H2ecO Ecostat is mounted directly to a tap/faucet (Figure 2).

The device can record the daily usage of the tap/faucet in order to help with management of daily water/energy usage. The information is sent by Bluetooth to a household PC where the user can track their water and energy use.

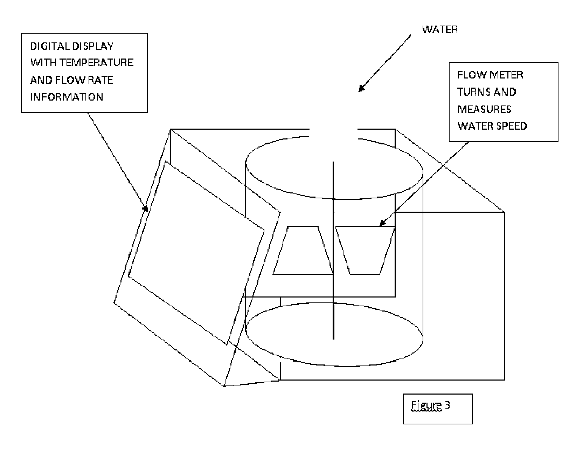

It is intended that the water pressure, water temperature or the turning of the flow meter would be able to produce enough electricity to run the device (Figure 3).

## Claims

1. It is intended that the H2ecO Ecostat is used to help reduce household water and energy use.
